# EUROPEAN PATENT SPECIFICATION

(11) **EP 1 702 749 B1**
(45) Date of publication and mention of the grant of the patent: **13.06.2012**
(21) Application number: 06004902.0
(22) Date of filing: 10.03.2006
(51) Int. Cl.: B32B 17/10, B44C 5/04, E04F 13/00, E04F 15/00

(54) **Method, and consequent product, for the creation of decorative glass plates that are resistent to knocks and thermal shocks**
Verfahren zur Herstellung von dekorativen, klopf- und hitzefesten Glasplatten und hergestellte Glasplatte
Méthode pour produire des plaques en verre résistants a chocs thermiques et mécaniques et plaque ainsi produite

(30) Priority: 15.03.2005 IT VA20050016
(43) Date of publication of application: 20.09.2006
(73) Proprietor: B.LAB Italia S.r.l., 21013 GALLARATE (VA) (IT)
(72) Inventor: Barban, Gianfranco, 21013 Gallarate (VA) (IT); Grimaldi, Stefano, 20134 Milano (IT)
(74) Representative: Grimaldo, Andrea

(56) References cited:
- DE-U1- 29 917 194
- GB-A- 877 520
- GB-A- 1 179 833
- US-A- 1 219 853
- US-A- 2 887 806
- US-A- 3 516 893
- US-A- 5 277 952
- US-B1- 6 416 204

## Description

The present invention concerns a method and the product obtained using said method for the creation of decorative plates of glass for use in building as a covering material for walls and floors and in furnishing for kitchen surfaces, bathroom furnishings and the like; said plates being able to resist thermal shocks and knocks or, at the least, to minimize the effects of such thermal shocks and knocks, usually making repairs possible.

Glass is particularly suitable, because of its transparent and glossy characteristics, to creating decorative articles of notable quality. In particular, a tempered plate that is shattered while keeping the fragments in place acquires an excellent brilliance, since the many surfaces of the fragments produce shimmering and countless reflections.

Particular decorative effects are obtained using the well-known technique in which three glass plates are joined together with a film of PVB, or something similar, in between, as in the stratification of security glass. Between the two external plates, one of previously tempered glass is placed; the panel thus formed is grounded perimetrically to finish the edges. This working causes the tempered glass to shatter (crackle). The adherence of the glass fragments to the external plates is assured by the PVB, which holds the panel together. In this way, one has fragmentation of the tempered plate without any shifting of the fragments.

GB 1 179 833 patent discloses a method of forming or constructing decorative or ornamental objects or articles, structural units or elements, and structure generally which comprises associating adhesively and/or mechanically into required shape or form a multiplicity or transparent or translucent glass fragments with or without a supporting or confirming medium.

On the other hand, to obtain gaps between said fragments, there is a well-known technique, which allows obtaining plates that have been shattered and reconstructed using an adhesive, said plates being contained between plates of glass.

In none of the known cases were plates which had been shattered and reconstructed individually, that is not contained between other plates, successfully obtained, which thus precludes the possibility of having thin plates.

Glass is a notoriously brittle material and is thus liable to break under mechanical actions, even if the latter are not too intense. Even thermal actions, such as intense and localized heating, make glass, precisely because of its characteristic brittleness, particularly subject to breaking.

Technological development has led to the creation of high-resistance glass, which shows exceptional characteristics of resistance to both knocks and heat. The tempering treatment greatly increases resistance to knocks, just as a particular type of glass, called pirex, has a resistance to heat high enough to actually allow its use for pots and pans which can be placed directly over the flame. Furthermore, the combining of more glass plates with the interposition of sheets of polymeric material, for example polyvinyl butyraldehyde (PVB), makes possible the creation of such afore-mentioned security glass, able to resist smashing and gun shots. Glass of this type is commonly used for windshields and armoured bulletproof windows.

In any case, the possibility still remains that glass, even of the high-resistance variety, will break and in such a case, obviously, will break in a precise way. In the case where tempered glass is involved, it crumbles completely and so any attempt to repair it is absolutely impossible, while if stratified security glass is involved, the various fragments remain in place, but without hope of repair, if not in extremely unusual cases, that is in the case of extremely localized breaks without fractures prone to further cracking. In such cases, it is usually sufficient to insert a low-viscosity adhesive, for example an acrylic resin that can be cross-linked with ultra-violet light, into the cracks to obtain an almost perfect repair. In cases where the fractures are susceptible to further cracking, no repairs would prove effective in that the crack tips would remain nonetheless a weak point and a focusing point for stresses, because of which the cracks would continue to propagate.

As far as resistance to thermal shocks is concerned, even if pirex glass performs very well, it is not suitable to make objects with plates of particularly substantial dimensions.

The aim of the present invention is to propose a method and the object deriving from the use of said method, respectively according to claims 1 and 13, for making decorative glass plates able to provide aesthetic effects of high quality, for use in furnishings and construction, said plates being, among other things, resistant to thermal shocks and localized knocks, and usually repairable in cases of breaks,

The object that derives from the use of the method according to the invention, is a plate formed by a large quantity of fragments, held together by an adhesive which re-establishes integrity. A plate of this type is not normally able to sit directly over a flame like pirex glass, as the resins normally used are not able to resist high temperatures, but it is without a doubt able to have even hot objects placed on it, since the dilatation caused by localized heating is absorbed by the resin. Furthermore, any breaks which might involve the article, obviously if of slight extent, would however be easily repaired because fractures susceptible to further cracking would not be produced.

The resistance to heat is thus inferior to that of pirex glass, just as the resistance to knocks is inferior to that of tempered glass; nevertheless, as will be seen in the following description, in its use as tiles for floors and covering for building, and as a surface material for kitchens and sinks, the conditions of normal use are not very harsh. However, situations can occur in which glass of a known type is subject to breaks to a greater extent and, moreover, in such a way that repairs are impossible, while a glass plate according to the invention is, should it break, almost always repairable.

The invention will now be described with an illustrative, not restrictive, aim in mind and with reference to the attached figures, in which:
- Figures 1 (a, b) briefly illustrate the method according to the invention;
- Figures 2 (a, b) show the procedure to obtain shattered plates with and without gaps forming;
- Figures 3 (a, b) illustrate both vacuum and press procedure, for obtaining plates, according to the invention;
- Figures 4 (a, b) show the insertion of adhesive in the cracklings of the shattered plates;
- Figures 5 (a, b) show the plates obtained by joining the plate, according to the invention, to other plates;
- Figures 6 (a, b) illustrate the method for obtaining the afore-mentioned coupled plates.

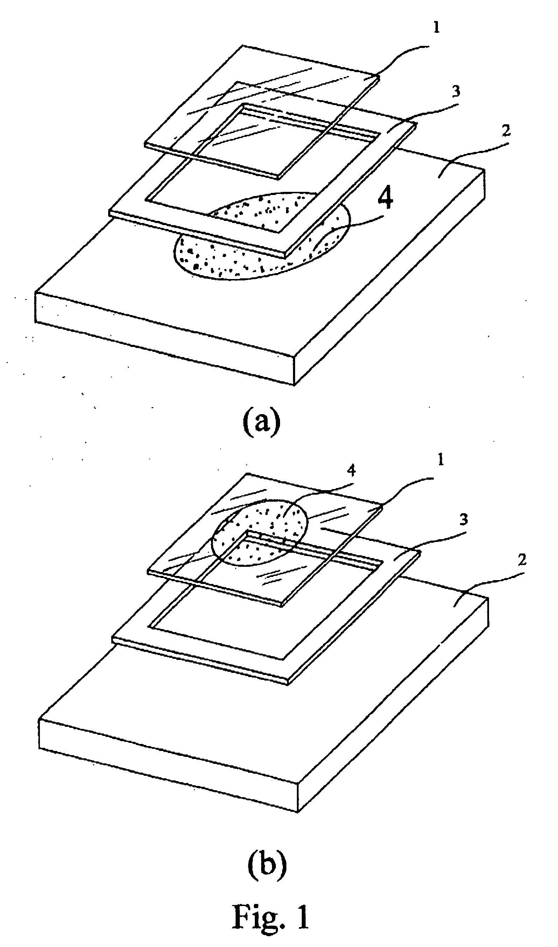

The method, according to the invention, briefly illustrated in figures 1 (a, b), essentially consists of shattering a plate of tempered glass (1), laying on a surface (2), and preferably contained within a frame (3) which prevents the fragments from dispersing, and of reconstructing the integrity of the plate with an adhesive (4) which enters into the cracks.

The afore-mentioned adhesive (4), for example an acrylic resin that can be cross-linked with ultra-violet light, or an epoxy resin with hardener, or else a polyester resin with catalyst, can be smeared beforehand on the supporting surface (2), as shown in fig. 1a, in which case it will rise again through the cracks, since the glass fragments, having a higher density than the adhesive, will tend to sink in the same. Alternatively, the adhesive (4) can be smeared on top of the said plate (1), as shown in fig. 1b, in which case it will fall, due to gravity, through the cracks.

In both cases, the supporting surface (2), If not made from a material to which the chosen adhesive can not adhere, such as PTFE, UHMWPE, or UHMWPET, must be treated with a release substance or else covered with a sheet of an intrinsically release material.

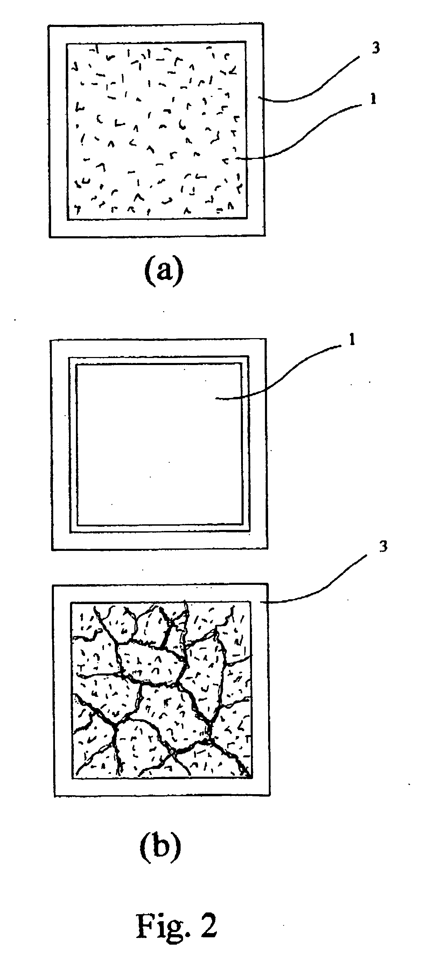

The aforesaid frame (3) should be of such dimensions as to perfectly contain the plate (1) (fig. 2a), In which case the fragments, after the plate's shattering (1), will stay in place; or else (fig. 2b), the frame (3) can be of larger dimensions. In such a case, it will be possible to arrange the fragments in such a way so as to obtain decorative gaps,

In practice, one proceeds in the following way:
- On a supporting surface (2), either releasing or made so by the use of suitable means, the adhesive is smeared (4);
- On top of said adhesive (4), the plate (1) is placed, exercising enough pressure to make the adhesive flow in such a way as to cover the whole surface of the plate (1);
- Around the plate (1), a frame is (3) placed;
- The plate (1) is fractured, for example with a burin and a hammer;
- In cases where the frame is of larger dimensions, the fragments are arranged, making them slide on the adhesive, in such a way as to form gaps;
- The fragments are pressed towards the bottom to aid their sinking in the adhesive, and, hence, the resin's rising through the fractures;
- The adhesive hardens, thus consolidating the plate (1);
- The consolidated plate (1) is removed from the frame (3),

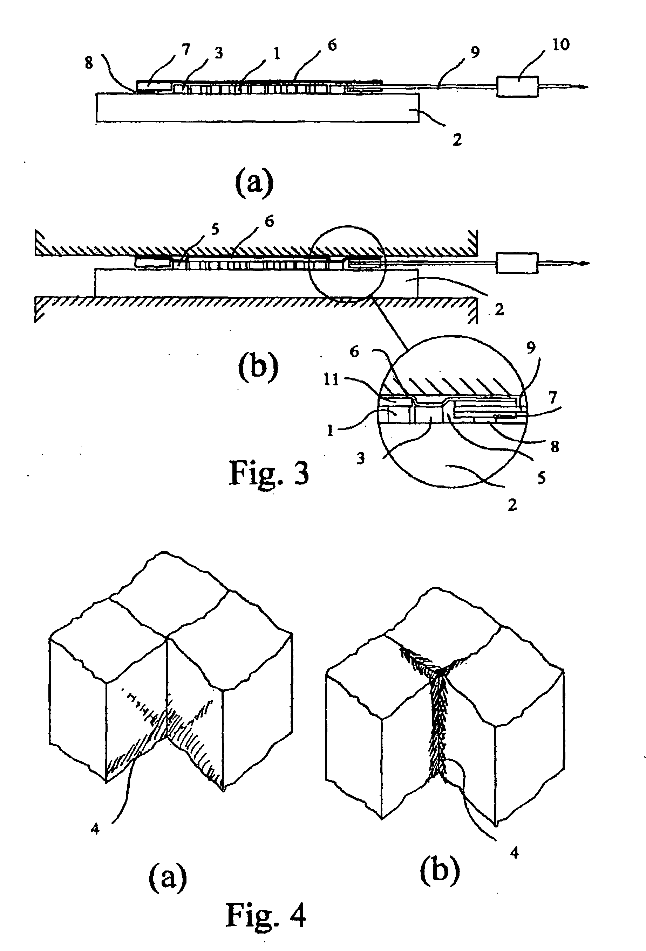

In order to improve the plate's consolidation (1) through a complete infiltration of the adhesive in the cracklings, it is preferable to remove the air present inside the cracklings themselves. As shown in fig. 3a, this operation can be achieved through the creation of a chamber (5) obtained for example through a membrane (6) applied to a external frame (7) which creates a seal with the supporting surface (2) through a continuous gasket (8), the said chamber (5) being placed in communication, through a pipe (9), with a vacuum pump (10). In this way, removing the air contained in the chamber (5), the plate (1) will be subjected to atmospheric pressure and so will be pressed against the supporting surface (2). At the same time, the removal of the air present in the cracklings makes filling the latter with adhesive easier. In addition to the push from atmospheric pressure, the whole group, consisting of the supporting surface (2), the plate (1), the frame (3) and the air chamber (5), can be inserted between the plates of a press for an even better consolidation, as shown in fig. 3b. This further operation can be useful in the case where the possibility exists that some fragments of the plate (1) undergo rotation or excessive movement, which hinders the reconsolidation of the plate. In this case, the atmospheric pressure might not be enough and thus necessitates the use of a press, In such case it is advisable to insert between the plate (1) and the membrane (6) a plate (11), for example of sheet metal, obviously treated with a releasing substance or with the interposition of a thin sheet of release material.

In the enlargement of fig. 3b a detail of the upper press plate is shown urging on membrane (6) deformed by atmospheric pressure that makes it to lie on the frame (3).

A possible variation (not shown) to the procedures described can be to keep upwards the part that stays in sight. This procedure can be advisable in the case of very small series or single pieces for which particularly accurate equipment would not be economically reasonable. Indeed, in this case, it is possible that air bubbles in the gaps and/or more or less empty gaps would remain. In such a case it is possible to refill the said gaps manually to eliminate the effects of the air bubbles.

Regarding the filling of the cracklings, it must be said that their complete refilling greatly reduces the brilliance of the glass, since it is the presence of numerous reflecting surfaces that causes the desired glitter; hence for the best aesthetic result, it is advisable to refill the cracklings only in part, said partial refilling being possible with an adhesive that rises only in part or else that rises through some routes and not others, fixing the fragments in place all the same. Figure 4a shows the adhesive (4), which rises In the cracklings among the plate's (1) fragments to only a fraction of their thickness, while fig. 4b shows the adhesive, which rises in the cracklings through the plate's (1) fragments through the whole thickness of said fragments but along only some routes. Obviously the refilling of the gaps obtained by separating the fragments is, however, complete.

The correct refilling of the cracklings can be achieved with the correct choice of the adhesive's viscosity and of the time of the application of pressure and vacuum.

If, for reasons that will be illustrated in the following text, one desires to fill the cracklings completely or almost completely, it would be best, regardless of the fluidity of the adhesive, to apply either some pressure and vacuum, while in the case where one wants to maintain a high level of brilliance and hence not completely fill the cracklings, it can be sufficient to apply pressure with a press, without vacuum.

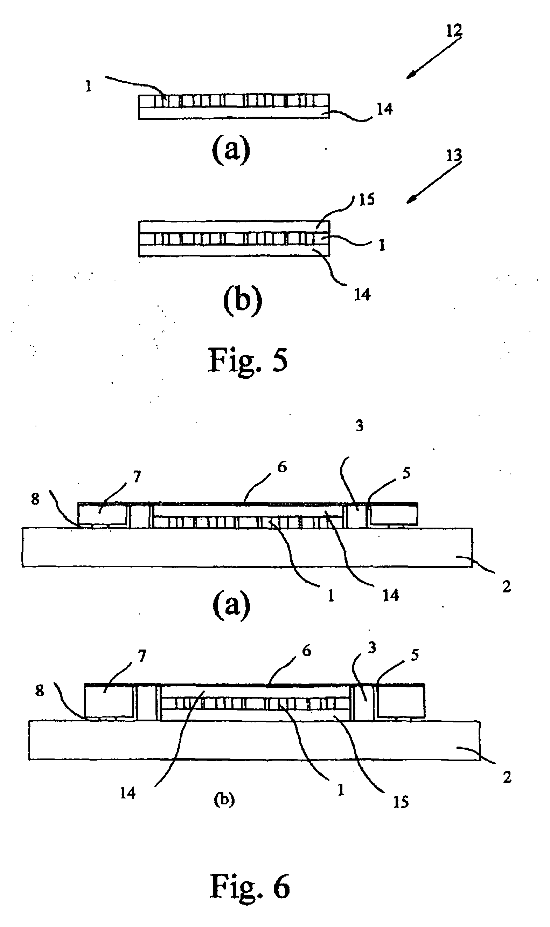

The plate obtained through the method described can be used individually or can in tum be joined to a second and third plate to obtain plates of two (12) (fig. 5a) or three (13) (fig. 5b) joined plates.

To have a coupled plate of type (12), the reconstructed plate (1) can be joined to a second plate (14) of equal dimensions. In the case where the afore-mentioned coupled plate (12) is to be used as a tile for floors and covering, the aforesaid second plate (14) can be of brick, while in the case of the coupled plate's use for decorative windows, walls, or doors, said second plate (14) can be in glass, if the window must be transparent, or else in sheet-metal, for example in aluminium or stainless steel, when transparency is not necessary.

For a coupled plate of type (13), the reconstructed plate (1) can be bonded in such a way as to be included between the afore-mentioned second plate (14) and a third glass plate (15).

The bonding of said second (14) and third (15) plates to the first (1) can occur either after said first plate (1) has been shattered and reconstructed according to the procedure described or during the process of formation of said shattered and reconstructed plate (1).

Figs. 6 (a, b) show respectively the plans of formation of said coupled plates (12) and (13). Obviously in these cases means for releasing the first plate (1) from the second and third, (14) and (15), should not be used.

In the case of coupled plate type (12), it must be remembered that, should gaps form in the plate (1), the withdrawal of the adhesive in the gaps can cause a contraction in the plate itself, with the consequence that the coupled plate (12) could end up deformed. In such cases, it is necessary to use adhesives with minimal or no withdrawal, such as, for example, acrylic resins that harden with ultra-violet light or epoxies with high percentages of force.

The aforesaid third plate (15) can in turn be of tempered and shattered glass with or without gaps.

The surfaces of the first plate (1), in the case of a plate that has been shattered and reconstructed individually, the external surface of the plate (1), in the case of coupled plates (12); and the external surface of the third plate (15) in the case of coupled plates (13) and of a shattered third plate (15), can advantageously undergo grinding and, possibly, polishing, obtaining thusly surfaces that are perfectly smooth and of a desirably finishing. For example, a grinding that leaves surfaces glazed can be advisable for floor tiles in order to avoid slippery surfaces In the case of cracklings that are not completely filled with adhesive, treatment with a suitable impregnating substance could be advisable in order to avoid the Infiltration of liquids that could affect the aesthetic aspect.

If the upper plate, whether it involves the afore-mentioned third plate (15) or the first plate (1), in the case of coupled plates of, respectively, type (13) or (12), should be shattered and with its cracklings completely refilled with adhesive, it would be practically indistinguishable from a intact plate. This operation would have however notable functional advantages. In the case of use for making kitchen surfaces, this operation makes said plates (15) and (1) practically immune to localized heating, obviously within the limits of cases that can occur in a domestic kitchen, such as, for example, those caused by setting down pots and pans just removed from the flame. Indeed, the localized dilatation is absorbed by the adhesive, which thus averts the risk of cracks. Moreover the fact that the cracklings are completely refilled prevents even the risk of infiltrations that can alter the aesthetic appearance.

Said shattered plates with cracklings that are completely refilled with adhesive offer a further advantage. In the case of use as floor tiles, that is heavier use regarding the falling of heavy, denting bodies, the possible breaking caused by said falls concerns only the zone immediately around the point of impact, impeding the propagation of cracks. This fact has the important consequence of making it possible to almost always repair the plate affected by the break, proceeding in a method similar to the repair of a car windshield, inserting, that is, an acrylic resin that can be cross-linked with ultra-violet light

In order to obtain particularly high levels of thickness, with a marked effect of depth, It is possible to bond even more than three plates, until reaching desired aesthetic and/or functional effect. The formation of such coupled plates of more than three plates can be done either during the formation of the first plate (1), as in the case of the coupled plates of type (12) and (13), or subsequently attaching as wished the desired number of shattered and reconstructed plates or of intact plates.

A possible variant of the method described consists of sucking the air completely out of the chamber (5) and the injection of the adhesive following this operation (4). In this way, it is practical Impossible to find some air left, since the air itself has been completely removed before the adhesive injection, and it is the adhesive itself that, passing through the fractures, helps the removal of the remaining air, which has not been removed by the vacuum pump yet.

Anyway, since the plates are obtained through a airless and/or press process, practically, said first plate (1) could be considered in contact with the second plate (14), in case of plates paired up per type (12), and also with said third plate (15), in case of plates paired up per type (13), since in this case the thickness of the interposed adhesive is quite thin.

The invention has been described with a purely illustrative and not limiting goal in mind. The sector's technical expert will be able to find numerous variations, all falling under the protection of the claims that follow.

## Claims

1. Method for creating decorative glass plates for use in building as a covering material for walls and floors and in decoration for kitchen surfaces, bathroom furnishings and the like, of the kind which provides for the shattering of a tempered glass plate and the reconstructing of the plate itself by using an adhesive, **characterized by** the fact that it provides for the following phases:
• the shattering of a tempered glass plate (1) in equipment suitable for holding; the fragments in place and for allowing the adhesive (4) to penetrate in the cracklings;
• the refilling at least in part of the cracklings with adhesive (4);
• the hardening of said adhesive (4).

2. Method according to claim 1, **characterized in that** said equipment, suitable for holding the fragments in place is a frame (3) which is larger than the said intact plate (1); in such a way as to allow the movement of the fragments to create decorative gaps, said gaps being at least partially refilled with adhesive (4).

3. Method according to claim 1, **characterized in that** said equipment, suitable for holding the fragments in place is a frame (3) of dimensions equal to those of the intact plate, in such a way as to prevent the fragments' movement.

4. Method according to at least one of claims 1 to 3, **characterized in that** it provides for the following phases:
• the placing of an adhesive layer (4) on a supporting surface (2) after spreading a suitable releasing agent;
• the placing of a first tempered glass plate (1) on said adhesive (4), said first plate (1) being contained in a suitable equipment (3);
• the shattering of said first plate (1);
• the placing of equipment suited for creating a vacuum chamber (5) over said fractured first plate (1);
• the removal of air from inside the aforesaid vacuum chamber (5), exercising pressure on the afore-mentioned shattered first plate (1) to keep it attached to the supporting surface (2) and to favour the penetration of the adhesive (4) in the spaces between the fragments of the said shattered first plate (1);
• the hardening of the adhesive (4);
• the removal of the consolidated article from the supporting surface (2).

5. Method according to at least one of claims 1 to 3. **characterized in that** it provides for the following phases:
• the spreading of a layer of adhesive (4) on a supporting surface (2) after spreading a suitable releasing agent;
• the placing of a first plate of tempered glass (1) on the aforesaid adhesive, said first plate (1) being contained in suitable equipment (3);
• the shattering of said first plate (1);
• the application of pressure on said shattered first plate (1) to keep it attached to said supporting surface (2) and to encourage the penetration of the adhesive (4) in the spaces between the fragments;
• the hardening of the adhesive (4);
• the removal of the consolidated article from the supporting surface (2);

6. Method according to at least one of claims 1 to 3, **characterized in that** it provides for the following phases:
• the spreading of a layer of adhesive (4) on a supporting surface (2) after spreading a suitable releasing agent;
• the placing of a first plate of tempered glass (1) on the aforesaid adhesive, said first plate (1) being contained in suitable equipment (3);
• the shattering of said first plate (1);
• the placing of equipment suited to creating a vacuum chamber (5) on top of the aforesaid shattered first plate (1);
• the removal of air from inside said vacuum chamber (5), exercising pressure on the aforementioned shattered first plate (1) to keep it attached to the supporting surface (2) and to encourage the penetration of the adhesive (4) in the spaces between the fragments;
• the application of pressure on the aforesaid shattered first plate (1) with a press to keep it attached to the afore-mentioned supporting surface (2), to encourage the penetration of adhesive (4) in the spaces between the fragments and to reduce the thickness of the adhesive (4) left on the surfaces of said first plate (1);
• the hardening of the adhesive (4);
• the removal of the consolidated article from the supporting surface (2).

7. Method according to at least one of the claims from 1 to 3, **characterized in that** it provides for the following phases:
• the placing of a first tempered plate (1) on a supporting surface (2) after spreading a suitable releasing agent, said first plate (1) being contained in a suitable equipment (3);
• the shattering of said first plate (1);
• the placing of equipment suited for creating a vacuum chamber (5) over said shattered first plate (1);
• the removal of air from inside the afore-mentioned vacuum chamber (5);
• the adhesive (4) injection inside of the aforesaid vacuum chamber (5);
• the application of pressure on said shattered first plate (1) to keep it attached to the supporting surface (2) and to encourage the penetration of the adhesive (4) in the spaces between the fragments;
• the hardening of the adhesive (4);
• the removal of the consolidated article from the supporting surface (2).

8. Method according to claims from 4 to 7, **characterized in that** it provides for the application of pressure, by a press, on said shattered first plate (1) to keep it attached to the supporting surface (2), to encourage the penetration of the adhesive (4) in the spaces between the fragments and to reduce the thickness of the adhesive (4) left on the surface of said first plate (1).

9. Method according to claims from 4 to 8, **characterized in that** it provides for an arrangement of the fragments of said first plates to create gaps.

10. Method according to claims from 4 to 9, **characterized in that** it provides for the placing of a second plate (14) on top of said first plate (1), with the interposition of adhesive (4) between said first plate (1) and second plate (14).

11. Method according to claims from 4 to 7, **characterized in that** it provides for a grinding of the surface of said first plate (1).

12. Method according to claims from 4 to 11, **characterized in that** between the aforesaid supporting surface (2) and the said first plate (1) to be shattered is placed a third glass plate (15), so that the adhesive (4) destined to refill at least partially the spaces between the fragments is placed directly on said third plate (15).

13. Method according to claim 12, **characterized in that** the afore-mentioned third glass plate (15) is shattered.

14. Method according to claim 13, **characterized in that** said third shattered glass plate (15) is superficially grinded.

15. Method according to at least one of claims from 4 to 14, **characterized in that** the aforesaid first plate (1) and possible second (14) and third plates (15) are placed on the afore-mentioned supporting surface (2) in such a way that the article obtained has its side, which following the finally assembly remains in sight, turned upwards.

16. Method according to at least one of claims from 1 to 15, **characterized in that** it provides for the refilling, with a suitable filling substance, of the cracklings present in the plate, which has been shattered (1) (15) and reconstructed with adhesive (4).

17. Decorative glass plate for use in building as a covering material for walls and floors and in decoration for kitchen surfaces, bathroom furnishings and the like, of the kind which provides for the shattering of a tempered glass plate and the reconstructing of the plate itself with adhesive, **characterized in that** the fractured surfaces of a fragment are the same of the corresponding fractured surfaces of the adjacent fragments, both in the case in which said fragments are still in contact and in the case in which the fragments are arranged to obtain decorative gaps.

18. Decorative glass plate, according to claim 17, **characterized in that** the cracklings between adjacent fragments are refilled only in part with said adhesive that rises only in part or else that rises through some routes and not others.

19. Decorative glass plate, according to claim 17 or 18, **characterized in that** it obtained with the method according to the claims 1 to 16.

20. Decorative glass plate, according to one of claims 17 to 19, **characterized in that** the aforesaid spaces between the afore-mentioned fragments are at least in part of a size to distinguish gaps, partially refilled with hardened adhesive.

21. Decorative glass plate, according to one of claims 17 to 19, **characterized in that** said spaces between said fragments have a thickness, which is practically null.

22. Decorative glass plate, according to one of claims 17 to 21, **characterized in that** it is coupled to a second plate (14), in order to obtain a coupled plate (12), in which said plate (1), shattered and reconstructed, results to be external.

23. Decorative glass plate, according to claim 22, **characterized in that** it is coupled to a third plate (15), in order to obtain a coupled plate (13), in which said plate (1), shattered and reconstructed, results included between said second plate (14) and third plate (15).

24. Decorative glass plate, according to claim 22, **characterized in that that** said first plate (1) touches the said second plate (14).

25. Decorative glass plate, according to claim 23, **characterized in that** said first plate (1) touches the said second plate (14) and the said third plate (15).

26. Decorative glass plate, according to claim 23 or 25, **characterized In that** the said third plate (15) is shattered without movement of the fragments.

27. Decorative glass plate, according to claim 23 or 25, **characterized in that** the said third plate (15) is shattered with movement of the fragments so as to create gaps.

28. Decorative glass plates, according to claim 26 or 27, **characterized in that** the spaces between the fragments of said shattered third plate (15) are at least partially refilled with adhesive.

29. Decorative glass plate, according to claim 26 or 27, **characterized in that** the spaces between the fragments of said shattered third plate (15) are at least partially refilled with a filling substance.

## Patentansprüche

1. Verfahren zum Erzeugen dekorativer Glasplatten zur Verwendung in Gebäuden als ein Deckmaterial für Wände und Flure und bei der Dekoration von Küchenoberflächen, Badezimmergestaltungen oder dergleichen, von der Art, die das Zertrümmern einer Hartglasplatte und das Wiederherstellen der Platte selbst durch Verwenden eines Klebstoffes vorsieht, **gekennzeichnet durch** die Tatsache, dass das Verfahren die folgenden Phasen vorsieht:
- das Zertrümmern einer Hartglasplatte (1) in einer Einrichtung, die geeignet ist, die Fragmente in Position zu halten und es dem Klebstoff (4) zu ermöglichen, in die Brüche zu dringen;
- das zumindest teilweise Wiederauffüllen der Brüche mit Klebstoff (4);
- das Aushärten des Klebstoffes (4).

2. Verfahren nach Anspruch 1, **dadurch gekennzeichnet, dass** die Einrichtung, die geeignet ist, die Fragmente in Position zu halten, ein Rahmen (3) ist, der größer ist als die unbeschädigte Platte (1), dergestalt, dass die Bewegung der Fragmente ermöglicht wird, um dekorative Lücken zu erzeugen, wobei die Lücken zumindest teilweise mit Klebstoff (4) wiederaufgefüllt werden.

3. Verfahren nach Anspruch 1, **dadurch gekennzeichnet, dass** die Einrichtung, die geeignet ist, die Fragmente in Position zu halten, ein Rahmen (3) ist, dessen Abmessungen denen der unbeschädigten Platte entsprechen, dergestalt, dass die Bewegung der Fragmente verhindert wird.

4. Verfahren nach zumindest einem der Ansprüche 1 bis 3, **dadurch gekennzeichnet, dass** das Verfahren die folgenden Phasen vorsieht:
- das Platzieren einer Klebstoffschicht (4) auf einer Auflagefläche (2) nach dem Verteilen eines geeigneten Trennmittels;
- das Platzieren einer ersten Hartglasplatte (1) auf dem Klebstoff (4), wobei die erste Platte (1) in einer geeigneten Einrichtung (3) enthalten ist;
- das Zertrümmern der ersten Platte (1):
das Platzieren einer Einrichtung, die geeignet ist, eine Vakuumkammer (5) zu erzeugen, über die zerbrochene erste Platte (1);
- das Entfernen von Luft aus dem Inneren der besagten Vakuumkammer (5), Ausüben von Druck auf die vorgenannte zertrümmerte erste Platte (1), um diese an der Auflagefläche (2) angelagert zu halten und um das Eindringen des Klebstoffes (4) in die Räume zwischen den Fragmenten der zertrümmerten ersten Platte (1) zu fördern;
- das Aushärten des Klebstoffes (4);
- das Entfernen des gefestigten Gegenstandes von der Auflagefläche (2).

5. Verfahren nach zumindest einem der Ansprüche 1 bis 3, **dadurch gekennzeichnet, dass** das Verfahren die folgenden Phasen vorsieht:
- das Verteilen einer Schicht von Klebstoff (4) auf einer Auflagefläche (2) nach dem Verteilen eines geeigneten Trennmittels;
- das Platzieren einer ersten Platte von Hartglas (1) auf dem besagten Klebstoff, wobei die erste Platte (1) in einer geeigneten Einrichtung (3) enthalten ist;
- das Zertrümmern der ersten Platte (1);
- das Anwenden von Druck auf die zertrümmerte erste Platte (1), um diese an der Auflagefläche (2) angelagert zu halten und um das Eindringen des Klebstoffes (4) in die Räume zwischen den Fragmenten zu fördern;
- das Aushärten des Klebstoffes (4);
- das Entfernen des gefestigten Gegenstandes von der Auflagefläche (2).

6. Verfahren nach zumindest einem der Ansprüche 1 bis 3, **dadurch gekennzeichnet, dass** das Verfahren die folgenden Phasen vorsieht:
- das Verteilen einer Schicht von Klebstoff (4) auf einer Auflagefläche (2) nach dem Verteilen eines geeigneten Trennmittels;
- das Platzieren einer ersten Platte von Hartglas (1) auf dem besagten Klebstoff, wobei die erste Platte (1) in einer geeigneten Einrichtung (3) enthalten ist;
- das Zertrümmern der ersten Platte (1);
- das Platzieren einer Einrichtung, die geeignet ist, eine Vakuumkammer (5) zu erzeugen, auf der besagten zertrümmerten ersten Platte (1);
- das Entfernen von Luft aus dem Inneren der Vakuumkammer (5), Ausüben von Druck auf die vorgenannte zertrümmerte erste Platte (1), um diese an der Auflagefläche (2) angelagert zu halten und um das Eindringen des Klebstoffes (4) in die Räume zwischen den Fragmenten zu fördern;
- das Anwenden von Druck auf die vorgenannte zertrümmerte erste Platte (1) mit einer Presse, um diese an der vorgenannten Auflagefläche (2) angelagert zu hatten, um das Eindringen von Klebstoff (4) in die Räume zwischen den Fragmenten zu fördern, und um die Dicke des auf den Oberflächen der ersten Platte (1) verbleibenden Klebstoffes (4) zu reduzieren;
- das Aushärten des Klebstoffes (4);
- das Entfernen des gefestigten Gegenstandes von der Auflagefläche (2).

7. Verfahren nach zumindest einem der Ansprüche 1 bis 3, **dadurch gekennzeichnet, dass** das Verfahren die folgenden Phasen vorsieht:
- das Platzieren einer ersten Hartplatte (1) auf einer Auflagefläche (2) nach dem Verteilen eines geeigneten Trennmittels, wobei die erste Platte (1) in einer geeigneten Einrichtung (3) enthalten ist,
- das Zertrümmern der ersten Platte (1);
- das Platzieren einer Einrichtung, die geeignet ist, eine Vakuumkammer (5) zu erzeugen, über die zertrümmerte erste Platte (1);
- das Entfernen von Luft aus dem Inneren der vorgenannten Vakuumkammer (5);
- die Injektion von Klebstoff (4) in das Innere der besagten Vakuumkammer (5);
- das Anwenden von Druck auf die zertrümmerte erste Platte (1), um diese an der Auflagefläche (2) angelagert zu halten und um das Eindringen des Klebstoffes (4) in die Räume zwischen den Fragmenten zu fördern;
- das Aushärten des Klebstoffes (4);
- das Entfernen des gefestigten Gegenstandes von der Auflagefläche (2).

8. Verfahren nach einem der Ansprüche 4 bis 7, **dadurch gekennzeichnet, dass** das Verfahren das Anwenden von Druck, durch eine Presse, auf die zertrümmerte erste Platte (1) vorsieht, um diese an der Auflagefläche (2) angelagert zu halten, um das Eindringen des Klebstoffes (4) in die Räume zwischen den Fragmenten zu fördern, und um die Dicke des auf der Oberfläche der ersten Platte (1) verbleibenden Klebstoffes (1) zu reduzieren.

9. Verfahren nach einem der Ansprüche 4 bis 8, **dadurch gekennzeichnet, dass** das Verfahren eine Anordnung der Fragmente der ersten Platte zum Erzeugen von Lücken vorsieht.

10. Verfahren nach einem der Ansprüche 4 bis 9, **dadurch gekennzeichnet, dass** das Verfahren das Platzieren einer zweiten Platte (14) auf der ersten Platte (1) mit der Einfügung von Klebstoff (4) zwischen der ersten Platte (1) und der zweiten Platte (14) vorsieht.

11. Verfahren nach einem der Ansprüche 4 bis 7, **dadurch gekennzeichnet, dass** das Verfahren ein Aufrauen der Oberfläche der ersten Platte (1) vorsieht.

12. Verfahren nach einem der Ansprüche 4 bis 11, **dadurch gekennzeichnet, dass** zwischen der besagten Auflagefläche (2) und der zu zertrümmernden ersten Platte (1) eine dritte Glasplatte (15) platziert wird, so dass der Klebstoff (4), der dazu bestimmt ist, die Räume zwischen den Fragmenten zumindest teilweise wiederaufzufüllen, direkt auf der dritten Platte (15) platziert wird.

13. Verfahren nach Anspruch 12, **dadurch gekennzeichnet, dass** die vorgenannte dritte Glasplatte (15) zertrümmert wird.

14. Verfahren nach Anspruch 13, **dadurch gekennzeichnet, dass** die dritte zertrümmerte Glasplatte (15) oberflächlich angeraut aufgeraut wird.

15. Verfahren nach zumindest einem der Ansprüche 4 bis 14, **dadurch gekennzeichnet, dass** die besagte erste Platte (1) und mögliche zweite (14) und dritte Platten (15) auf der vorgenannten Auflagefläche (2) platziert werden, dergestalt, dass der erhaltene Gegenstand seine Seite, die nach der Endmontage sichtbar bleibt, aufwärts gewendet hat.

16. Verfahren nach zumindest einem der Ansprüche 1 bis 15, **dadurch gekennzeichnet, dass** das Verfahren das Wiederauffüllen, mit einem geeigneten FüllStoff, der in der Platte, die zertrümmert wurde (1) (15) und mit Klebstoff (4) wie derhergestellt wurde, vorhandenen Brüche vorsieht.

17. Dekorative Glasplatte zur Verwendung in Gebäuden als ein Deckmaterial für Wände und Flure und bei der Dekoration von Küchenoberflächen, Badezimmergestaltungen oder dergleichen, von der Art, die das Zertrümmern einer Hartglasplatte und das Wiederherstellen der Platte selbst mit Klebstoff vorsieht, **dadurch gekennzeichnet, dass** die Bruchflächen eines Fragmentes den korrespondierenden Bruchflächen der benachbarten Fragmente entsprechen, sowohl in dem Fall, dass die Fragmente immer noch in Kontakt stehen, als auch in dem Fall, dass die Fragmente angeordnet sind, um dekorative Lücken zu erhalten.

18. Dekorative Glasplatte nach Anspruch 17, **dadurch gekennzeichnet, dass** die Brüche zwischen benachbarten Fragmenten nur teilweise mit dem Klebstoff, der nur teilweise ansteigt oder ansonsten nur durch ein paar Routen und nicht durch andere ansteigt, wiederaufgefüllt sind.

19. Dekorative Glasplatte nach Anspruch 17 oder 18, **dadurch gekennzeichnet, dass** die Glasplatte mit dem Verfahren nach einem der Ansprüche 1 bis 16 erhalten wird.

20. Dekorative Glasplatte nach einem der Ansprüche 17 bis 19, **dadurch gekennzeichnet, dass** die besagten Räume zwischen den vorgenannten Fragmenten zumindest teilweise von einer Größe sind, die ein Unterscheiden von Lücken, die teilweise mit ausgehärtetem Klebstoff wiederaufgefüllt sind, ermöglicht.

21. Dekorative Glasplatte nach einem der Ansprüche 17 bis 19, **dadurch gekennzeichnet, dass** die Räume zwischen den Fragmenten eine Dicke haben, die praktisch Null ist.

22. Dekorative Glasplatte nach einem der Ansprüche 17 bis 21, **dadurch gekennzeichnet, dass** die Glasplatte mit einer zweiten Glasplatte (14) verbunden ist, um eine verbundene Platte (12) zu erhalten, in welcher die Platte (1), die zertrümmert und wiederhergestellt wurde, an der Außenseite liegt.

23. Dekorative Glasplatte nach Anspruch 22, **dadurch gekennzeichnet, dass** die Glasplatte mit einer dritten Platte (15) verbunden ist, um eine verbundene Platte (13) zu erhalten, in welcher die Platte (1), die zertrümmert und wiederhergestellt wurde, zwischen der zweiten Platte (14) und der dritten Platte (15) eingefügt liegt.

24. Dekorative Glasplatte nach Anspruch 22, **dadurch gekennzeichnet, dass** die erste Platte (1) die zweite Platte (14) berührt.

25. Dekorative Glasplatte nach Anspruch 23, **dadurch gekennzeichnet, dass** die erste Platte (1) die zweite Platte (14) und die dritte Platte (15) berührt.

26. Dekorative Glasplatte nach Anspruch 23 oder 25, **dadurch gekennzeichnet, dass** die dritte Platte (15) ohne eine Bewegung der Fragmente zertrümmert ist.

27. Dekorative Glasplatte nach Anspruch 23 oder 25, **dadurch gekennzeichnet, dass** die dritte Platte (15) mit einer Bewegung der Fragmente zertrümmert ist, um so Lücken zu erzeugen.

28. Dekorative Glasplatte nach Anspruch 26 oder 27, **dadurch gekennzeichnet, dass** die Räume zwischen den Fragmenten der zertrümmerten dritten Platte (15) zumindest teilweise mit Klebstoff wiederaufgefüllt sind.

29. Dekorative Glasplatte nach Anspruch 26 oder 27, **dadurch gekennzeichnet, dass** die Räume zwischen den Fragmenten der zertrümmerten dritten Platte (15) zumindest teilweise mit einem Füllstoff wiederaufgefüllt sind.

## Revendications

1. Procédé de création de plaques de verre décoratives pour une utilisation en bâtiment comme matériau de couverture pour des murs et des sols et en décoration pour des surfaces de cuisine, des mobiliers de salle de bain et similaires, de la sorte qui comporte la fragmentation d'une plaque de verre trempé et la reconstruction de la plaque elle-même par l'utilisation d'un adhésif, **caractérisé par le fait qu'**il comporte les phases suivantes :
- la fragmentation d'une plaque de verre trempé (1) dans un équipement approprié pour maintenir les fragments en place et pour permettre à l'adhésif (4) de pénétrer dans les craquelures ;
- le remplissage, au moins en partie, des craquelures par l'adhésif (4) ;
- le durcissement dudit adhésif (4).

2. Procédé selon la revendication 1, **caractérisé par le fait que** ledit équipement, approprié pour maintenir les fragments en place, est un cadre (3) qui est plus grand que ladite plaque intacte (1), de façon à permettre le déplacement des fragments pour former des espaces décoratifs, lesdits espaces étant au moins partiellement remplis par l'adhésif (4).

3. Procédé selon la revendication 1, **caractérisé par le fait que** ledit équipement, approprié pour maintenir les fragments en place est un cadre (3) de dimensions égales à celles de la plaque intacte, de façon à empêcher le déplacement des fragments.

4. Procédé selon au moins l'une des revendications 1 à 3, **caractérisé par le fait qu'**il comporte les phases suivantes :
- la mise en place d'une couche d'adhésif (4) sur une surface de support (2) après étalement d'un agent de dégagement approprié ;
- la mise en place d'une première plaque de verre trempé (1) sur ledit adhésif (4), ladite première plaque (1) étant contenue dans un équipement approprié (3) ;
- la fragmentation de ladite première plaque (1) ;
- la mise en place d'un équipement approprié pour créer une chambre à vide (5) sur ladite première plaque fracturée (1) ;
- l'élimination de l'air de l'intérieur de la chambre à vide (5) mentionnée ci-dessus, en exerçant une pression sur la première plaque fragmentée (1) mentionnée ci-dessus pour la maintenir attachée à la surface de support (2) et pour favoriser la pénétration de l'adhésif (4) dans les espaces entre les fragments de ladite première plaque fragmentée (1) ;
- le durcissement de l'adhésif (4) ;
- le retrait de l'article consolidé de la surface de support (2).

5. procédé selon au moins l'une des revendications 1 à 3, **caractérisé par le fait qu'**il comporte les phases suivantes :
- l'étalement d'une couche d'adhésif (4) sur une surface de support (2) après étalement d'un agent de dégagement approprié ;
- la mise en place d'une première plaque (1) de verre trempé sur l'adhésif précité, ladite première plaque (1) étant contenue dans un équipement approprié (3) ;
- la fragmentation de ladite première plaque (1) ;
- l'application d'une pression sur ladite première plaque fragmentée (1) pour la maintenir attachée à ladite surface de support (2) et pour encourage la pénétration de l'adhésif (4) dans les espaces entre les fragments ;
- le durcissement de l'adhésif (4) ;
- le retrait de l'article consolidé de la surface de support (2).

6. Procédé selon au moins l'une des revendications 1 à 3, **caractérisé par le fait qu'**il comporte les phases suivantes :
- l'étalement d'une couche d'adhésif (4) sur une surface de support (2) après étalement d'un agent de dégagement approprié ;
- la mise en place d'une première plaque de verre trempé (1) sur l'adhésif précité, ladite première plaque (1) étant contenue dans un équipement approprié (3) ;
- la fragmentation de ladite première plaque (1) ;
- la mise en place d'un équipement approprié pour créer une chambre à vide (5) sur le dessus de la première plaque fragmentée (1) précitée ;
- l'élimination de l'air de l'intérieur de ladite chambre à vide (5), en exerçant une pression sur la première plaque fragmentée (1) mentionnée ci-dessus pour la maintenir attachée à la surface de support (2) et pour encourager la pénétration de l'adhésif (4) dans les espaces entre les fragments ;
- l'application d'une pression sur la première plaque fragmentée (1) précitée avec une presse pour la maintenir attachée à la surface de support (2) mentionnée ci-dessus, pour encourager la pénétration d'adhésif (4) dans les espaces entre les fragments et pour réduire l'épaisseur de l'adhésif (4) laissé sur les surfaces de ladite première plaque (1) ;
- le durcissement de l'adhésif (4) ;
- le retrait de l'article consolidé de la surface de support (2).

7. Procédé selon au moins l'une des revendications 1 à 3, **caractérisé par le fait qu'**il comporte les phases suivantes :
- la mise en place d'une première plaque trempée (1) sur une surface de support (2) après étalement d'un agent de dégagement approprié, ladite première plaque (1) étant contenue dans un équipement approprié (3) ;
- la fragmentation de ladite première plaque (1) ;
- à mise en place d'un équipement approprié pour créer une chambre à vide (5) sur ladite première plaque fragmentée (1) ;
- l'élimination de l'air de l'intérieur de la chambre à vide (5) mentionnée ci-dessus ;
- l'injection d'adhésif (4) à l'intérieur de la chambre à vide (5) précitée ;
- l'application d'une pression sur ladite première plaque fragmentée (1) pour la maintenir attachée à la surface de support (2) et pour encourager la pénétration de l'adhésif (4) dans les espaces entre les fragments ;
- le durcissement de l'adhésif (4) ;
- le retrait de l'article consolidé de la surface de support (2).

8. Procédé selon les revendications 4 à 7, **caractérisé par le fait qu'**il comporte l'application d'une pression, par une presse, sur ladite première plaque fragmentée (1) pour la maintenir attachée à la surface de support (2), pour encourager la pénétration de l'adhésif (4) dans les espaces entre les fragments et pour réduire l'épaisseur de l'adhésif (4) laissé sur la surface de ladite première plaque (1).

9. Procédé selon les revendications 4 à 8, **caractérisé par le fait qu'**il comporte une disposition des fragments desdites premières plaques pour créer des espaces.

10. Procédé selon les revendications 4 à 9, **caractérisé par le fait qu'**il comporte la mise en place d'une deuxième plaque (14) sur le dessus de ladite première plaque (1), avec l'interposition d'adhésif (4) entre ladite première plaque (1) et ladite deuxième plaque (14).

11. Procédé selon les revendications 4 à 7, **caractérisé par le fait qu'**il comporte un dégrossissage de la surface de ladite première plaque (1).

12. Procédé selon les revendications 4 à 11, **caractérisé par le fait qu'**entre la surface de support (2) précitée et ladite première plaque (1) à fragmenter, est placée une troisième plaque de verre (15), de telle sorte que l'adhésif (4) destiné à remplir au moins partiellement les espaces entre les fragments est placé directement sur ladite troisième plaque (15).

13. Procédé selon la revendication 12, **caractérisé par le fait que** la troisième plaque de verre (15) mentionnée ci-dessus est fragmentée.

14. Procédé selon la revendication 13, **caractérisé par le fait que** ladite troisième plaque de verre (15) fragmentée est dégrossie superficiellement.

15. Procédé selon au moins l'une des revendications 4 à 14, **caractérisé par le fait que** la première plaque (1) précitée et les éventuelles deuxième plaque (14) et troisième plaque (75) sont placées sur la surface de support (2) mentionnée ci-dessus d'une manière telle que l'article obtenu a son côté, qui après l'assemblage final reste en vue, tourné vers le haut.

16. Procédé selon au moins l'une des revendications 1 à 15, **caractérisé par le fait qu'**il comporte le remplissage, par une substance de remplissage appropriée, des craquelures présentes dans la plaque, qui a été fragmentée (1)(15) et reconstruite avec de l'adhésif (4).

17. Plaque de verre décorative destinée à être utilisée en bâtiment comme matériau de couverture pour des murs et des sols et en décoration pour des surfaces de cuisine, des mobiliers de salle de bain et similaires, de la sorte qui comporte la fragmentation d'une plaque de verre trempé et la reconstruction de la plaque elle-même avec un adhésif, **caractérisé par le fait que** les surfaces fracturées d'un fragment sont les mêmes que les surfaces fracturées correspondantes des fragments adjacent, à la fois dans le cas dans lequel lesdits fragments sont encore en contact et dans le cas dans lequel les fragments sont disposés pour obtenir des espaces décoratifs.

18. Plaque de verre décorative, selon la revendication 17, **caractérisée par le fait que** les craquelures entre des fragments adjacents sont remplies seulement en partie par ledit adhésif qui monte seulement en partie ou sinon qui monte travers certains chemins et non d'autres.

19. Plaque de verre décorative, selon l'une des revendications 17 ou 18, **caractérisée par le fait qu'**elle est obtenue par le procédé selon les revendications 1 à 16.

20. Plaque de verre décorative, selon l'une des revendications 17 à 19, **caractérisée par le fait que** les espaces précités entre les fragments mentionnés ci-dessus sont au moins en partie d'une dimension pour distinguer des espaces, partiellement remplis par de l'adhésif durci.

21. Plaque de verre décorative, selon l'une des revendications 17 à 19, **caractérisée par le fait que** lesdits espaces entre lesdits fragments ont une épaisseur, qui est pratiquement nulle.

22. Plaque de verre décorative, selon l'une des revendications 17 à 21, **caractérisée par le fait qu'**elle est couplée à une deuxième plaque (14), dans le buL d'obtenir une plaque couplée (12), dans laquelle ladite plaque (1), fragmentée et reconstruite, sera externe.

23. Plaque de verre décorative, selon la revendication 22, **caractérisée par le fait qu'**elle est couplée à une troisième plaque (15), de façon à obtenir une plaque couplée (13), dans laquelle ladite plaque (1), fragmentée et reconstruite, sera incluse entre ladite deuxième plaque (14) et ladite troisième plaque (15).

24. Plaque de verre décorative, selon la revendication 22, **caractérisée par le fait que** ladite première plaque (1) touche ladite deuxième plaque (14).

25. Plaque de verre décorative, selon la revendication 23, **caractérisée par le fait que** ladite première plaque (1) touche ladite deuxième plaque (14) et ladite troisième plaque (15).

26. Plaque de verre décorative, selon l'une des revendications 23 ou 25, **caractérisée par le fait que** ladite troisième plaque (15) est fragmentée sans déplacement des fragments.

27. Plaque de verre décorative, selon les revendications 23 ou 25, **caractérisée par le fait que** ladite troisième plaque (15) est fragmentée avec déplacement des fragments de façon à créer des espaces.

28. Plaque de verre décorative, selon l'une des revendications 26 ou 27, **caractérisée par le fait que** les espaces entre les fragments de ladite troisième plaque fragmentée (15) sont au moins partiellement remplis par de l'adhésif.

29. Plaque de verre décorative, selon l'une des revendications 26 ou 27, **caractérisée par le fait que** les espaces entre les fragments de ladite troisième plaque fragmentée (15) sont au moins partiellement remplis par une substance de remplissage.
